(19) Europäisches Patentamt
European Patent Office
Office européen des brevets

(11) **EP 4 306 566 B1**

(12) **EUROPEAN PATENT SPECIFICATION**

(45) Date of publication and mention of the grant of the patent:
**06.05.2026 Bulletin 2026/19**

(21) Application number: **22766711.0**

(22) Date of filing: **08.02.2022**

(51) International Patent Classification (IPC):
***C08G 59/18*** ^(2006.01) ***C09J 11/06*** ^(2006.01)
***C09J 11/08*** ^(2006.01) ***C09J 163/00*** ^(2006.01)

(52) Cooperative Patent Classification (CPC):
(C-Sets available)
**C09J 163/00; C08L 79/04;** C08G 59/28 (Cont.)

(86) International application number:
**PCT/JP2022/004966**

(87) International publication number:
**WO 2022/190746 (15.09.2022 Gazette 2022/37)**

# (54) CURABLE RESIN COMPOSITION, CURED PRODUCT AND ADHESIVE

HÄRTBARE HARZZUSAMMENSETZUNG, GEHÄRTETES PRODUKT UND KLEBSTOFF

COMPOSITION DE RÉSINE DURCISSABLE, PRODUIT DURCI ET ADHÉSIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2021 JP 2021036706**

(43) Date of publication of application:
**17.01.2024 Bulletin 2024/03**

(73) Proprietor: **ADEKA CORPORATION**
**Arakawa-ku**
**Tokyo**
**116-8554 (JP)**

(72) Inventors:
- **OTA, Keisuke**
**Kuki-shi, Saitama 346-0101 (JP)**
- **HIRAYAMA, Kohei**
**Kuki-shi, Saitama 346-0101 (JP)**
- **OGAWA, Ryo**
**Kuki-shi, Saitama 346-0101 (JP)**
- **YAMADA, Shinsuke**
**Kuki-shi, Saitama 346-0101 (JP)**

(74) Representative: **Forstmeyer, Dietmar et al**
**Boeters & Lieck**
**Oberanger 32**
**80331 München (DE)**

(56) References cited:
**WO-A1-2011/099292**
**WO-A1-2011/099292**
**WO-A1-2013/183303**
**WO-A1-2013/183303**
**JP-A- 2004 292 737**
**JP-A- 2012 251 045**
**JP-A- 2013 216 865**
**JP-A- 2013 216 865**
**JP-A- 2019 077 804**
**JP-A- 2019 077 804**
**JP-A- 2019 210 319**
**JP-B2- 5 508 342**
**US-A1- 2002 058 778**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 306 566 B1

(52) Cooperative Patent Classification (CPC): (Cont.)

C-Sets
**C08L 79/04, C08L 63/00, C08K 3/36**

## Description

### Technical Field

The present invention relates to a curable resin composition, and more specifically, relates to a curable resin composition containing a cyanate ester resin, a specific epoxy resin, and a latent curing agent.

### Background Art

Epoxy resins have a wide variety of industrial uses as components or materials constituting coating materials, adhesives, various molding materials, etc.

Meanwhile, properties, such as heat resistance etc., may be insufficient in cases of simply using an existing epoxy resin singly or a plurality of types of epoxy resins as a mixture. To address this, cyanate-epoxy composite resin compositions obtained by mixing an epoxy resin and a cyanate ester resin have become widely used as useful materials because of their high heat resistance.

For example, a semiconductor-sealing liquid epoxy resin composition including a cyanate ester resin, an epoxy resin, an inorganic filler, a metal chelate, and a dihydrazide compound has previously been proposed (Patent Literature 1). Unfortunately, this composition has unsatisfactory properties, such as the need for heating at high temperatures for a long period of time for curing.

Further, the use of an amine-based curing agent in a composite composition containing a cyanate ester resin and an epoxy resin has also been proposed (Patent Literature 2). With this technique, however, sufficient storage stability has not been obtained.

Furthermore, a thermosetting resin composition including a cyanate ester resin, an epoxy resin, and a latent curing agent containing an imidazole component has also been proposed (Patent Literature 3). Unfortunately, this composition is unsatisfactory, in terms that the amount of use of the cyanate ester resin is limited from the viewpoint of obtaining sufficient storage stability.

Further, a composite resin composition employing, in combination, a cyanate ester resin, an epoxy resin, a guanidine compound, and a phenol compound has also been proposed (Patent Literature 4). The heat resistance of this composition, however, is not fully satisfactory.

Furthermore, a composite resin composition obtained by combining an amine-based latent curing agent with a combination of an epoxy resin and a cyanate ester resin having a large number of functional groups has also been proposed (Patent Literature 5). The storage stability of this composition, however, is not fully satisfactory.

Patent Literatures 6 to 8 disclose 4-amino-3-methylphenol-type epoxy resins used in the present invention, but do not disclose the combined use thereof with a cyanate ester resin.

### Citation List

#### Patent Literature

Patent Literature 1: US Patent No. 6469074
Patent Literature 2: JP S60-250026A
Patent Literature 3: US 2002/058778A1
Patent Literature 4: US 2012/178853A1
Patent Literature 5: US 2012/309923A1 and WO 2011/099292 A1
Patent Literature 6: US 2009/311827A1
Patent Literature 7: JP 2009-158712A
Patent Literature 8: JP 2009-155450A

JP 5 508342 B2 discloses an epoxy resin material containing an epoxy resin and a curing agent. JP 2019 077804 A discloses a one-component resin composition. WO 2013/183303 A1 discloses a curable resin composition containing a curing agent consisting of a polyfunctional epoxy compound having a specific structure, a cyanate ester, and an imidazole compound. JP 2013 216865 A discloses a thermosetting resin filler.

### Summary of Invention

As described above, the cyanate-epoxy composite resin compositions disclosed in Patent Literatures 1 to 5

cannot sufficiently achieve both storage stability and heat resistance.

Further, it is known that using a 4-aminophenol-type epoxy resin, as an epoxy resin, in a cyanate-epoxy composite resin composition can achieve a cured product having low viscosity and good physical properties. Inventors, however, conducted further studies to find that, in cases of using a 4-aminophenol-type epoxy resin, as an epoxy resin, in a cyanate-epoxy composite resin composition, there is still room for improvement in terms of storage stability.

An objective to be achieved by the present invention is to provide a curable resin composition having excellent storage stability and capable of providing a cured product having excellent heat resistance.

As a result of diligent research, Inventors have found that a curable resin composition containing a cyanate ester resin, a specific epoxy resin, and a latent curing agent can achieve the aforementioned objective, thus arriving at the present invention.

That is, the present invention provides a curable resin composition containing: (A) a cyanate ester resin; (B) an epoxy resin essentially including a 4-amino-3-methylphenol-type epoxy resin and an aliphatic epoxy resin; and (C) a latent curing agent; wherein the amount of the 4-amino-3-methylphenol-type epoxy resin within the total amount of the epoxy resins is from 20 to 100 mass%, and the amount of the aliphatic epoxy resin within the total amount of the epoxy resins is from 1 to 70 mass%.

The present invention also provides a cured product of the curable resin composition, and an adhesive containing the curable resin composition.

Description of Embodiments

A curable resin composition of the present invention will be described below according to preferred embodiments thereof.

A cyanate ester resin, which is component (A) as used in the present invention, is a compound having 2 or more cyanate groups, and any compound can be used without particular limitation regarding molecular structure, molecular weight, etc.

As for the cyanate ester resin which is component (A), it is possible to use, for example, at least one selected from the group consisting of a compound represented by formula (1) below, a compound represented by formula (2) below, and a polymer of the compound represented by formula (1) and/or the compound represented by formula (2):

$$NC\text{-}O\text{-}A^1\text{-}Y^1\text{-}A^2\text{-}O\text{-}CN \qquad (1)$$

(In the formula, $Y^1$ represents a divalent hydrocarbon group which is not substituted or is substituted by a fluorine atom or a cyanato group, or represents -O-, -S-, or a single bond; and $A^1$ and $A^2$ each independently represent a phenylene group which is not substituted or is substituted by 1 to 4 alkyl groups.)

[Chem. 1]

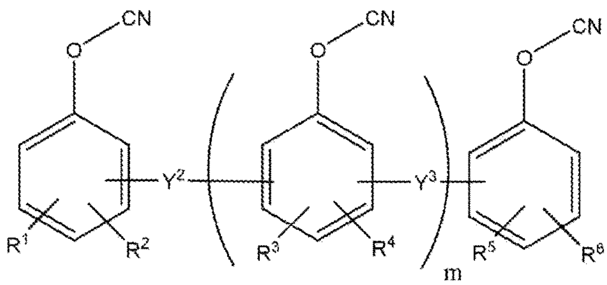

(2)

(In the formula, m represents an integer of 1 or greater; $Y^2$ and $Y^3$ each independently represent -S-, or a divalent hydrocarbon group which is not substituted or is substituted by a fluorine atom or a cyanato group; and $R^1$, $R^2$, $R^3$, $R^4$, $R^5$, and $R^6$ each independently represent a hydrogen atom or an alkyl group having 1 to 4 carbon atoms.)

In the present Description, examples of the alkyl group having 1 to 4 carbon atoms may include a methyl group, an ethyl group, a propyl group, an isopropyl group, a butyl group, an isobutyl group, a s-butyl group, and a t-butyl group.

Examples of the divalent hydrocarbon group which is not substituted or is substituted by a fluorine atom, as represented by $Y^1$ in the formula (1) and $Y^2$ and $Y^3$ in the formula (2), may suitably include hydrocarbon groups having 1 to 20 carbon atoms. $Y^1$ in the formula (1) or $Y^2$ and $Y^3$ in the formula (2) may preferably include a structure represented by one of formulas (Y-1) to (Y-9) below.

[Chem. 2]

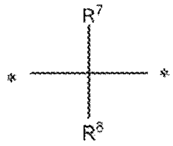

(Y-1)

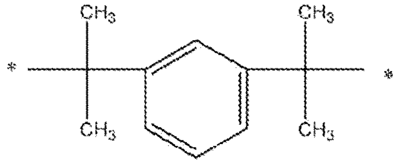

(Y-2)

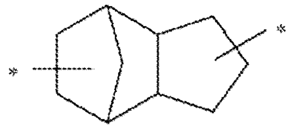

(Y-3)

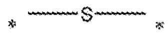

(Y-4)

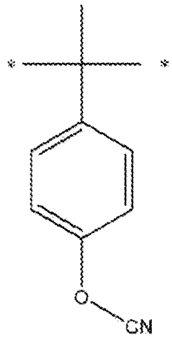

(Y-5)

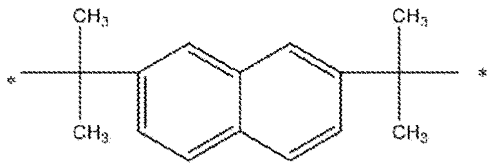

(Y-6)

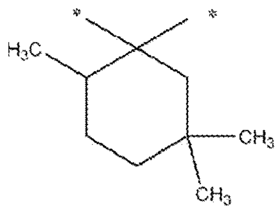

(Y-7)

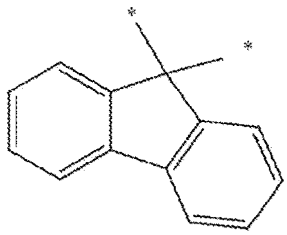

(Y-8)

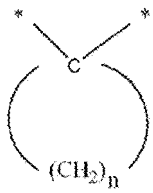

(Y-9)

(In the formulas, n represents an integer from 4 to 12; $R^7$ and $R^8$ each independently represent a hydrogen atom or a methyl group which is not substituted or is substituted by a fluorine atom; and * represents a bonding site.)

Among the cyanate ester resins shown as concrete examples above, it is preferable to use compounds represented by the formula (1) because of excellent curability and excellent balance after being cured.

Further, for reasons that it is possible to obtain cured products having even better heat resistance, bisphenol E-type cyanate ester resins, as well as biphenyl-type, novolac phenol-type, and bisphenol A-type cyanate ester resins, can be given as preferred examples from among the aforementioned cyanate ester resins. Among the above, it is preferable to use bisphenol E-type cyanate ester resins. Examples of bisphenol-type cyanate ester resins, such as bisphenol E-type and bisphenol A-type cyanate ester resins, may include resins wherein $Y^1$ in the formula (1) is represented by (Y-1). Examples of biphenyl-type cyanate ester resins may include resins wherein $Y^1$ in the formula (1) is a single bond. Examples of novolac phenol-type cyanate ester resins may include resins wherein $Y^2$ and $Y^3$ in the formula (2) each independently represent (Y-1).

Further, for reasons that it is possible to obtain cured products having even better heat resistance, in cases of using a bisphenol-type, a biphenyl-type or a novolac phenol-type cyanate ester resin, it is preferable that the bisphenol-type, biphenyl-type or novolac phenol-type cyanate ester resin occupies 80 mass% or greater of the entire cyanate ester resin, and it is more preferable that the bisphenol-type, biphenyl-type or novolac phenol-type cyanate ester resin occupies 90 mass% or greater. Particularly, in the present invention, it is preferable that the bisphenol-type cyanate ester resin occupies 80 mass% or greater of the entire cyanate ester resin, and it is more preferable that the bisphenol-type cyanate ester resin occupies 90 mass% or greater, and it is particularly preferable that the bisphenol-type cyanate ester resin occupies 95 mass% or greater.

From the viewpoint of particularly good balance between curability and storage stability, it is preferable that the

content of the cyanate ester resin is from 3 to 80 parts by mass, particularly preferably from 7 to 60 parts by mass, with respect to 100 parts by mass of the solid content of the composition. It should be noted that "solid content" refers to the total amount of all components other than the solvent. The present curable resin composition may or may not contain a solvent, but in cases where a solvent is included, the content thereof is preferably 5 mass% or less, more preferably 2 mass% or less, with respect to the curable resin composition.

The epoxy resin (B) to be used in the present invention is an epoxy resin which contains a 4-amino-3-methylphenol-type epoxy resin and an aliphatic epoxy resin as essential components. As a result of research, Inventors have found that, when using a 4-aminophenol-type epoxy resin in combination with a cyanate ester resin, there is still room for improvement in terms of storage stability, as will be described in Comparative Example 1 further below. On the other hand, even though a 4-aminophenol-type epoxy resin and a 4-amino-3-methylphenol-type epoxy resin are similar in structure, the use of a 4-amino-3-methylphenol-type epoxy resin in combination with a cyanate ester resin can significantly improve storage stability, which is a significant effect which could not be anticipated from conventional art.

The 4-amino-3-methylphenol-type epoxy resin is an epoxy resin which employs 4-amino-3-methylphenol as a starting material. Methods for producing the same are not particularly limited, and for example, it can be produced by reacting 4-amino-3-methylphenol and an epihalohydrin in the presence of an alkali.

Examples of epihalohydrins may include epichlorohydrin, epibromohydrin, β-methylepichlorohydrin, β-methylepibromohydrin, etc. Among the above, epichlorohydrin is preferred because of its good reactivity to hydroxy groups and amino groups. The aforementioned epihalohydrin may be used singly, or two or more types may be used in combination. Examples of the alkalis may include alkali metal hydroxides such as sodium hydroxide, potassium hydroxide, etc., and alkali metal carbonates such as sodium carbonate, potassium carbonate, etc. Among these alkalis, sodium hydroxide is particularly preferred. It is preferable to use these alkalis as an aqueous solution, but in some cases, alkalis in powder or solid form may be added simultaneously or separately to water.

The usage rate between the aforementioned 4-amino-3-methylphenol and epihalohydrin is not particularly limited, so long as it is 1 equivalent or greater with respect to the hydroxy group and the amino group in the former, but is typically from 1.0 to 10.0 equivalents, and preferably from 2.0 to 8.0 equivalents. Here, an equivalent with respect to the hydroxy group and the amino group of 4-amino-3-methylphenol is calculated by dividing the number of moles of epihalohydrin by "the number of moles of the hydroxy group + (the number of moles of the amino group)$\times$2". If the ratio of the epihalohydrin is less than 1.0 equivalent (equal equivalent), hydroxy groups and amino groups that are not subjected to glycidyl etherification will remain, and the purity may deteriorate. If the ratio exceeds 10.0 equivalents, epichlorohydrin may be wasted, and also, the reaction rate may decrease, and the epoxy equivalent may increase due to side reactions.

The usage amount of the aforementioned alkali is not particularly limited, so long as it is 1 equivalent (in terms of mole) or greater with respect to the hydroxy group and the amino group of the 4-amino-3-methylphenol, but is typically from 1.0 to 2.0 equivalents, and preferably from 1.0 to 1.5 equivalents. If the alkali usage amount is less than 1 equivalent with respect to the hydroxy group in 4-amino-3-methylphenol, chlorohydrin ether groups that are not subjected to glycidyl etherification will remain, and the purity may deteriorate. An amount exceeding 2.0 equivalents is not only wasteful, but also the purity of the product may deteriorate due to side reactions.

For the aforementioned reaction, a phase-transfer catalyst may also be used. A phase-transfer catalyst is known as a reagent used for causing reaction between an organic compound insoluble to water and a reagent insoluble to an organic solvent. Examples of the phase-transfer catalyst may include tertiary amines such as trimethylamine, trioctylamine, tridecylamine, etc.; quaternary ammonium bases such as tetramethylammonium, methyltrioctylammonium, methyltridecylammonium, benzyltrimethylammonium, etc.; and quaternary ammonium salts such as tetramethylammonium chloride, methyltrioctylammonium chloride, methyltridecylammonium chloride, benzyltrimethylammonium chloride, etc. Particularly, quaternary ammonium salts are preferred.

The usage amount of the phase-transfer catalyst can be determined as appropriate, and is typically from 0.1 to 10.0 parts by mass, preferably from 0.5 to 5.0 parts by mass, with respect to 100 parts by mass of 4-amino-3-methylphenol. If the usage amount of the phase-transfer catalyst is less than 0.1 parts by mass, the reaction rate may be extremely slow, and the epoxy equivalent may decrease due to the progress of side reactions, making it impractical. If the usage amount exceeds 10.0 parts by mass, the phase-transfer catalyst may be wasted, and in some cases, the reaction may be inhibited.

The aforementioned reaction is typically conducted through heating, preferably at temperatures from 30°C to 100°C, more preferably from 40°C to 80°C. At the time of the reaction, a solvent inactive to the reaction, such as hydrocarbon, ether or ketone, may be used. However, in cases of using an excessive amount of epihalohydrin, it is not essentially necessary to use such a solvent inactive to the reaction, because epihalohydrin can also function as a solvent.

An example of the 4-amino-3-methylphenol-type epoxy resin according to the present invention may include a compound having the structure shown in formula (I) below.

[Chem. 3]

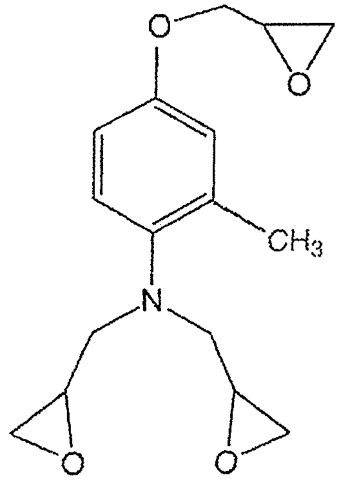

(I)

The epoxy resin, which is component (B) as used in the present invention, may use epoxy resins other than the aforementioned 4-amino-3-methylphenol-type epoxy resin and the aliphatic epoxy resin, and any epoxy resin having at least two epoxy groups in its molecule can be used without particular limitation regarding molecular structure, molecular weight, etc.

Examples of epoxy resins may include: polyglycidyl ether compounds of mononuclear polyhydric phenol compounds such as hydroquinone, resorcin, pyrocatechol, phloroglucinol, etc.; polyglycidyl ether compounds of polynuclear polyhydric phenol compounds such as dihydroxynaphthalene, biphenol, methylene bisphenol (bisphenol F), methylene bis(o-cresol), ethylidene bisphenol, isopropylidene bisphenol (bisphenol A), isopropylidene bis(o-cresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolac, ortho-cresol novolac, ethylphenol novolac, butylphenol novolac, octylphenol novolac, resorcin novolac, terpene phenol, etc.; polyglycidyl ether compounds of polyol compounds such as ethylene glycol, propylene glycol, butylene glycol, hexanediol, polyethylene glycol, polypropylene glycol, thio glycol, dicyclopentadiene dimethanol, 2,2-bis(4-hydroxycyclohexyl)propane (hydrogenated bisphenol A), glycerin, trimethylolpropane, pentaerythritol, sorbitol, bisphenol A-alkylene oxide adduct, etc.; glycidyl ester compounds of aliphatic, aromatic or alicyclic polybasic acids such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, endomethylene tetrahydrophthalic acid, etc., and homopolymers or copolymers of glycidyl methacrylate; epoxy compounds having a glycidylamino group, such as N,N-diglycidylaniline, bis(4-(N-methyl-N-glycidylamino)phenyl)methane, diglycidyl ortho-toluidine, N,N-bis(2,3-epoxy propyl)-4-(2,3-epoxy propoxy)-2-methylaniline, N,N-bis(2,3-epoxy propyl)-4-(2,3-epoxy propoxy)aniline, N,N,N',N'-tetra(2,3-epoxy propyl)-4,4-diaminodiphenylmethane, etc.; epoxidized products of cyclic olefin compounds, such as vinylcyclohexene diepoxide, cyclopentadiene diepoxide, 3,4-epoxycyclohexylmethyl-3,4-epoxycyclohexane carboxylate, 3,4-epoxy-6-methylcyclohexylmethyl-6-methylcyclohexane carboxylate, bis(3,4-epoxy-6-methylcyclohexylmethyl) adipate, etc.; epoxidized conjugated diene polymers, such as epoxidized polybutadiene, epoxidized styrene-butadiene copolymer, etc.; and heterocyclic compounds, such as triglycidyl isocyanurate, etc. These epoxy resins may be internally crosslinked by isocyanate-terminal prepolymers, or highly polymerized by using polyvalent active hydrogen compounds (polyhydric phenols, polyamines, carbonyl group-containing compounds, polyphosphoric esters, etc.).

The epoxy resin may be used singly, or two or more types may be used in combination.

In the epoxy resins within the composition of the present invention, the amount of the 4-amino-3-methylphenol-type epoxy resin is from 20 to 100 mass%, more preferably from 25 to 70 mass%. Using an amount of 20 mass% or greater can obtain a cured product having a particularly good heat resistance.

In the epoxy resins within the composition of the present invention, as regards epoxy resins other than the aforementioned 4-amino-3-methylphenol-type epoxy resin and the aliphatic epoxy resin, it is preferable to include a glycidyl-type epoxy resin having a glycidyl group from the viewpoint of reactivity, and particularly, it is preferable to include a glycidyl-type epoxy resin having an aromatic ring from the viewpoint of heat resistance. In cases where the present epoxy resins include a glycidyl-type epoxy resin having an aromatic ring as an epoxy resin other than the aforementioned 4-amino-3-methylphenol-type epoxy resin, the amount thereof within the total amount of the epoxy resins is preferably from 1 to 80 mass%, particularly preferably from 15 to 75 mass%, from the viewpoint of heat resistance and securing the amount of the 4-amino-3-methylphenol-type epoxy resin. As for the aromatic ring-containing glycidyl-type epoxy resin other than

the 4-amino-3-methylphenol-type epoxy resin, it is particularly preferable to use a polyglycidyl ether compound of a polynuclear polyhydric phenol compound from the viewpoint of heat resistance. An aliphatic epoxy resin is used in combination because it is possible to lower the viscosity of the composition. The aliphatic epoxy resin is used in addition to the 4-amino-3-methylphenol-type epoxy resin in an amount thereof within the total amount of the epoxy resins of from 1 to 70 mass%, particularly preferably from 5 to 50 mass%, from the viewpoint of lowering the viscosity and securing the amount of the 4-amino-3-methylphenol-type epoxy resin. Examples of aliphatic epoxy resins may include dicyclopentadiene-type epoxy resins. A dicyclopentadiene-type epoxy resin refers to a compound having a dicyclopentadiene skeleton and including an epoxy group. It is preferable that the dicyclopentadiene-type epoxy resin is an aliphatic compound. In cases where the epoxy resin of the present invention includes a dicyclopentadiene-type epoxy resin as the aforementioned aliphatic epoxy resin, the amount thereof within the total amount of the epoxy resins is preferably from 1 to 70 mass%, particularly preferably from 5 to 50 mass%, from the same viewpoint as above.

The usage amount of the epoxy resin, which is the component (B), is preferably from 1 to 1000 parts by mass, more preferably from 3 to 500 parts by mass, even more preferably from 5 to 200 parts by mass, with respect to 100 parts by mass of the cyanate ester resin, which is the component (A), because excellent cured product properties can be obtained.

Further, the usage amount of the 4-amino-3-methylphenol-type epoxy resin is preferably from 1 to 200 parts by mass with respect to 100 parts by mass of the cyanate ester resin, which is the component (A). Use within this range is preferable because a resin composition having excellent heat resistance can be obtained. The usage amount is more preferably from 5 to 150 parts by mass, even more preferably from 10 to 100 parts by mass.

As for the latent curing agent, which is component (C) as used in the present invention, it is preferable to use an amine-based latent curing agent containing an active hydrogen (also referred to hereinafter as "active-hydrogen-containing amine-based latent curing agent"), because it is possible to obtain a curable resin having a good balance between storage stability and curability.

Examples of active-hydrogen-containing amine-based latent curing agents may include: dibasic acid dihydrazides, such as oxalic acid dihydrazide, malonic acid dihydrazide, succinic acid dihydrazide, glutaric acid dihydrazide, adipic acid dihydrazide, suberic acid dihydrazide, azelaic acid dihydrazide, sebacic acid dihydrazide, phthalic acid dihydrazide, etc.; guanidine compounds, such as dicyandiamide, benzoguanamine, acetoguanamine, etc.; melamine; and modified amines, such as dehydration condensates of amines and carboxylic acids, adducts of amines and epoxies, adducts of amines and isocyanates, Michael adducts of amines, Mannich reaction products of amines, condensates of amines and urea, and condensates of amines and ketones.

Among the aforementioned active-hydrogen-containing amine-based latent curing agents, preferred examples may include at least one selected from: guanidine compounds, such as dicyandiamide, benzoguanamine, acetoguanamine, etc.; (C-1): a modified amine obtained by reacting an epoxy compound and an amine compound having one or more active hydrogens; (C-2): a modified amine obtained by reacting an isocyanate compound and an amine compound having one or more active hydrogens; (C-3): a modified amine obtained by reacting an epoxy compound, an isocyanate compound, and an amine compound having one or more active hydrogens; and (C-4): a latent curing agent containing a phenol resin in addition to at least one of modified amine selected from (C-1), (C-2), or (C-3).

Examples of the amine compound having one or more active hydrogens may include: alkylene diamines, such as ethylenediamine, 1,2-diaminopropane, 1,3-diaminopropane, 1,3-diaminobutane, 1,4-diaminobutane, hexamethylenediamine, etc.; polyalkylpolyamines, such as diethylenetriamine, triethylenetriamine, tetraethylenepentamine, etc.; alicyclic polyamines, such as 1,4-diaminocyclohexane, 1,3-diaminocyclohexane, 1,3-diaminomethylcyclohexane, 1,2-diaminocyclohexane, 1,4-diamino-3,6-diethylcyclohexane, 4,4'-diaminodicyclohexylmethane, 1,3-bis(aminomethyl)cyclohexane, 1,4-bis(aminomethyl)cyclohexane, 4,4'-diaminodicyclohexylpropane, bis(4-aminocyclohexyl)sulfone, 4,4'-diaminodicyclohexyl ether, 2,2'-dimethyl-4,4'-diaminodicyclohexylmethane, isophorone diamine, norbornene diamine, etc.; aromatic polyamines, such as m-xylylenediamine, diaminodiphenylmethane, diaminodiphenylsulfone, diethyltoluenediamine, 1-methyl-3,5-diethyl-2,4-diaminobenzene, 1-methyl-3,5-diethyl-2,6-diaminobenzene, 1,3,5-triethyl-2,6-diaminobenzene, 3,3'-diethyl-4,4'-diaminodiphenylmethane, 3,5,3',5'-tetramethyl-4,4'-diaminodiphenylmethane, etc.; guanamines, such as benzoguanamine, acetoguanamine, etc.; imidazoles, such as 2-methylimidazole, 2-ethyl-4-methylimidazole, 2-isopropylimidazole, 2-undecylimidazole, 2-heptadecylimidazole, 2-phenylimidazole, 2-phenyl-4-methylimidazole, 2-aminopropylimidazole, etc.; dihydrazides, such as oxalic acid dihydrazide, malonic acid dihydrazide, succinic acid dihydrazide, glutaric acid dihydrazide, adipic acid dihydrazide, suberic acid dihydrazide, azelaic acid dihydrazide, sebacic acid dihydrazide, phthalic acid dihydrazide, etc.; N,N-dimethylaminoethylamine, N,N-diethylaminoethylamine, N,N-diisopropylaminoethylamine, N,N-diallylaminoethylamine, N,N-benzylmethylaminoethylamine, N,N-dibenzylaminoethylamine, N,N-cyclohexylmethylaminoethylamine, N,N-dicyclohexylaminoethylamine, N-(2-aminoethyl)pyrrolidine, N-(2-aminoethyl)piperidine, N-(2-aminoethyl)morpholine, N-(2-aminoethyl)piperazine, N-(2-aminoethyl)-N'-methylpiperazine, N,N-dimethylaminopropylamine, N,N-diethylaminopropylamine, N,N-diisopropylaminopropylamine, N,N-diallylaminopropylamine, N,N-benzylmethylaminopropylamine, N,N-dibenzylaminopropylamine, N,N-cyclohexylmethylaminopropylamine, N,N-dicyclohexylaminopropylamine, N-(3-aminopropyl)pyrrolidine, N-(3-aminopropyl)piperidine, N-(3-aminopropyl)morpholine, N-(3-aminopropyl)piperazine, N-(3-aminopropyl)-N'-methylpiperidine, 4-(N,N-dimethylamino)benzylamine, 4-(N,N-diethylamino)benzylamine, 4-(N,N-diisopropylamino)benzylamine, N,N-dimethylisophoronediamine, N,N-dimethylbisaminocyclohexane, N,N,N'-trimethylethylenediamine, N'-ethyl-N,N-dimethylethylenediamine, N,N,N'-trimethylethylenediamine, N'-ethyl-N,N-dimethylpropanediamine, N'-ethyl-N,N-dibenzylaminopropylamine; N,N-(bisaminopropyl)-N-methylamine, N,N-bisaminopropylethylamine, N,N-bisaminopropylpropylamine, N,N-bisaminopropylbutylamine, N,N-bisaminopropylpentylamine, N,N-bisaminopropylhexylamine, N,N-bisaminopropyl-2-ethylhexylamine, N,N-bisaminopropylcyclohexylamine, N,N-bisaminopropylbenzylamine, N,N-bisaminopropylallylamine, bis[3-(N,N-dimethylaminopropyl)]amine, bis[3-(N,N-diethylaminopropyl)]amine, bis[3-(N,N-diisopropylaminopropyl)]amine, bis[3-(N,N-dibutylaminopropyl)]amine, etc.

Examples of the epoxy compound may include: polyglycidyl ether compounds of mononuclear polyhydric phenol compounds, such as hydroquinone, resorcin, pyrocatechol, phloroglucinol, etc.; polyglycidyl ether compounds of polynuclear polyhydric phenol compounds, such as dihydroxynaphthalene, biphenol, methylene bisphenol (bisphenol F), methylene bis(o-cresol), ethylidene bisphenol, isopropylidene bisphenol (bisphenol A), isopropylidene bis(o-cresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfonylbisphenol, oxybisphenol, phenol novolac, o-cresol novolac, ethylphenol novolac, butylphenol novolac, octylphenol novolac, resorcin novolac, terpene phenol, etc.; polyglycidyl ethers of polyols, such as ethylene glycol, propylene glycol, butylene glycol, hexanediol, polyglycol, thiodiglycol, glycerin, trimethylol propane, pentaerythritol, sorbitol, bisphenol A-alkylene oxide adduct, etc.; glycidyl esters of aliphatic, aromatic or alicyclic polybasic acids, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, endomethylene tetrahydrophthalic acid, etc.; homopolymers or copolymers of glycidyl methacrylate; epoxy compounds containing a glycidylamino group, such as N,N-diglycidylaniline, bis(4-(N-methyl-N-glycidylamino)phenyl)methane, diglycidyl o-toluidine, etc.; epoxidized products of cyclic olefin compounds, such as vinylcyclohexene diepoxide, dicyclopentadiene diepoxide, 3,4-epoxycyclohexylmethyl-3,4-epoxycyclohexane carboxylate, 3,4-epoxy-6-methylcyclohexylmethyl-6-methylcyclohexane carboxylate, bis(3,4-epoxy-6-methylcyclohexylmethyl)adipate, etc.; epoxidized conjugated diene polymers, such as epoxidized polybutadiene, epoxidized styrene-butadiene copolymer, etc.; and heterocyclic compounds, such as triglycidyl isocyanurate, etc.

The epoxy compounds may be glycidyl-type epoxy compounds, or cycloalkene oxide-type epoxy compounds typified by epoxidized products of cyclic olefin compounds. In cases where the epoxy compound is of a glycidyl-type, it may be an aromatic epoxy compound having an aromatic ring or an aliphatic epoxy compound not having an aromatic ring. Preferably, from the viewpoint of reactivity, it is preferable to use a glycidyl-type epoxy compound as an epoxy compound, and from the viewpoint of heat resistance, it is more preferable to use a glycidyl-type aromatic epoxy compound.

Examples of the isocyanate compound may include: aromatic diisocyanates, such as 2,4-tolylene diisocyanate, 2,6-tolylene diisocyanate, diphenylmethane-4,4'-diisocyanate, phenylene diisocyanate, xylylene diisocyanate, tetramethylxylylene diisocyanate, 1,5-naphthylene diisocyanate, 1,5-tetrahydronaphthalene diisocyanate, 3,3'-dimethyldiphenyl-4,4'-diisocyanate, dianisidine diisocyanate, tetramethylxylylene diisocyanate, etc.; alicyclic diisocyanates, such as isophorone diisocyanate, dicyclohexylmethane-4,4'-diisocyanate, trans-1,4-cyclohexyl diisocyanate, norbornene diisocyanate, etc.; aliphatic diisocyanates, such as tetramethylene diisocyanate, 1,6-hexamethylene diisocyanate, 2,2,4- and/or (2,4,4)-trimethylhexamethylene diisocyanate, lycine diisocyanate, etc.; isocyanurate trimers, biuret trimers, trimethylolpropane adducts, etc., of the aforementioned diisocyanates; triphenylmethane triisocyanate, 1-methylbenzol-2,4,6-triisocyanate, dimethyltriphenylmethane tetraisocyanate, etc.

Further, the aforementioned isocyanate compounds may take the form of a modified product, such as carbodiimide-modified, isocyanurate-modified, biuret-modified, etc., or may take the form of blocked isocyanate which is blocked by a variety of blocking agents.

In the modified amine of (C-1), as regards the usage amounts of the amine compound having one or more active hydrogens and the epoxy compound, it is preferable to perform reaction such that the amount of the epoxy group in the epoxy compound is from 0.1 to 1.1 equivalents, particularly preferably from 0.2 to 1.0 equivalent, with respect to 1 equivalent of the active hydrogen of the amine compound.

In the modified amine of (C-2), as regards the usage amounts of the amine compound having one or more active hydrogens and the isocyanate compound, it is preferable to perform reaction such that the amount of the isocyanate group in the isocyanate compound is from 0.1 to 1.1 equivalents, particularly preferably from 0.2 to 1.0 equivalent, with respect to 1 equivalent of the active hydrogen of the amine compound.

Further, in the modified amine of (C-3), as regards the usage amounts of the amine compound having one or more active hydrogens, the epoxy compound, and the isocyanate compound, it is preferable to perform reaction such that the total amount of the epoxy group in the epoxy compound and the isocyanate group in the polyisocyanate compound is from 0.1 to 1.1 equivalents, particularly preferably from 0.2 to 1.0 equivalent, with respect to 1 equivalent of the active hydrogen of the amine compound.

It is preferable to set the amount of the epoxy compound and/or the isocyanate compound, with respect to the

amine compound having one or more active hydrogens, equal to or greater than the aforementioned lower limit value, because it is possible to improve the storage stability of the curable resin composition, and it is preferable to set the amount equal to or below the aforementioned upper limit value, because it is possible to reliably achieve curability.

Particularly, as regards these modified amines, it is preferable to use a modified amine containing an active hydrogen group because of excellent curability and cured properties.

Methods for producing each of the modified amines of (C-1), (C-2) and (C-3) are not particularly limited; the modified amine can be obtained by causing reaction by heating at temperatures from atmospheric temperature to 140°C for 1 to 10 hours, using a solvent as necessary.

In the modified amine (C-3), it is generally preferable to first react the amine compound and the epoxy compound, and then react the polyisocyanate compound.

In cases of using a solvent, the solvent can be removed after termination of the reaction by heating under atmospheric pressure or reduced pressure.

Examples of the solvent that may be used for producing the aforementioned modified amines may include: ketones, such as methyl ethyl ketone, methyl amyl ketone, diethyl ketone, acetone, methyl isopropyl ketone, propylene glycol monomethyl ether acetate, cyclohexane, etc.; ethers, such as tetrahydrofuran, 1,2-dimethoxyethane, 1,2-diethoxyethane, propylene glycol monomethyl ether, etc.; esters, such as ethyl acetate, n-butyl acetate, etc.; aromatic hydrocarbons, such as benzene, toluene, xylene, etc.; halogenated aliphatic hydrocarbons, such as carbon tetrachloride, chloroform, trichloroethylene, methylene chloride, etc.; and halogenated aromatic hydrocarbons, such as chlorobenzene, etc.

Examples of the phenol resin to be used in the component (C-4) may include polyhydric phenol compounds, such as phenol novolac resin, cresol novolac resin, aromatic hydrocarbon formaldehyde resin-modified phenolic resin, dicyclopentadiene-phenol addition-type resin, phenol aralkyl resin (Xylok resin), naphthol aralkyl resin, trisphenylol methane resin, tetraphenylol ethane resin, naphthol novolac resin, naphthol-phenol co-condensed novolac resin, naphthol-cresol co-condensed novolac resin, biphenyl-modified phenolic resin (a polyhydric phenol compound wherein phenol nuclei are linked by a bismethylene group), biphenyl-modified naphthol resin (a polyhydric naphthol compound wherein phenol nuclei are linked by a bismethylene group), aminotriazine-modified phenolic resin (a compound containing a phenol skeleton, a triazine ring and a primary amino group in its molecular structure), and alkoxy group-containing aromatic ring-modified novolac resin (a polyhydric phenol compound wherein a phenol nucleus and an alkoxy group-containing aromatic ring are linked by formaldehyde).

In the present invention, from the viewpoint of obtaining an excellent balance between the storage stability and curability of the curable resin composition, it is preferable that the phenol resin (C-4) to be used has a softening point of from 50 to 200°C.

The usage amount of the phenol resin for obtaining the aforementioned modified amine (C-4) is preferably from 10 to 100 parts by mass, particularly preferably from 20 to 60 parts by mass, with respect to 100 parts by mass of the modified amine(s), i.e., the component (C-1), the component (C-2) and/or the component (C-3). This range is preferable, because sufficient curability can be achieved when the amount is 10 parts by mass or greater, and deterioration in physical properties of the cured product can be avoided more reliably when the amount is 100 parts by mass or less.

Examples of commercially available latent curing agents may include: Adeka Hardener EH-3636AS (from Adeka Corporation; dicyandiamide-type latent curing agent), Adeka Hardener EH-4351S (from Adeka Corporation; dicyandiamide-type latent curing agent), Adeka Hardener EH-5011S (from Adeka Corporation; imidazole-type latent curing agent), Adeka Hardener EH-5046S (from Adeka Corporation; imidazole-type latent curing agent), Adeka Hardener EH-4357S (from Adeka Corporation; polyamine-type latent curing agent), Adeka Hardener EH-5057P (from Adeka Corporation; polyamine-type latent curing agent), Adeka Hardener EH-5057PK (from Adeka Corporation; polyamine-type latent curing agent), Ajicure PN-23 (from Ajinomoto Fine-Techno Co., Inc.; amine adduct-based latent curing agent), Ajicure PN-40 (from Ajinomoto Fine-Techno Co., Inc.; amine adduct-based latent curing agent), Ajicure VDH (from Ajinomoto Fine-Techno Co., Inc.; hydrazide-based latent curing agent), Fujicure FXR-1020 (from T&K TOKA Corporation; latent curing agent), etc.

The usage amount of the latent curing agent (C) is not particularly limited, but is preferably from 1 to 70 parts by mass, more preferably from 3 to 60 parts by mass, with respect to 100 parts by mass in total of the cyanate ester resin (A) and the epoxy resin(s) (B) (the total amount of epoxy resins in cases of using the 4-amino-3-methylphenol-type epoxy resin and other epoxy resin(s)).

In the present invention, it is possible to use, in combination, the aforementioned latent curing agent (C) and a known curing accelerator, as necessary. Concrete examples of the curing accelerator may include: phosphines, such as triphenylphosphine, etc.; phosphonium salts, such as tetraphenylphosphonium bromide, etc.; imidazoles, such as 2-methylimidazole, 2-phenylimidazole, 2-ethyl-4-methylimidazole, 2-undecylimidazole, 1-cyanoethyl-2-methylimidazole, etc.; imidazole salts between the aforementioned imidazoles and trimellitic acid, isocyanuric acid, boron, etc.; amines, such as benzyldimethylamine, 2,4,6-tris(dimethylaminomethyl)phenol, etc.; quaternary ammonium salts, such as trimethylammonium chloride, etc.; ureas, such as 3-(p-chlorophenyl)-1,1-dimethylurea, 3-(3,4-dichlorophenyl)-1,1-dimethylurea, 3-phenyl-1,1-dimethylurea, isophorone diisocyanate-dimethylurea, tolylene diisocyanate-dimethylurea, etc.; and complex compounds between boron trifluoride and amines, ether compounds, etc. The curing accelerator may be used singly, or two or more types may be used in combination. The content of the curing accelerator in the curable resin composition of the present invention is not particularly limited, and may be set as appropriate depending on the use of the curable resin composition.

The resin composition of the present invention may further contain other types of additives, as necessary. Examples of the additives may include: phenol compounds, such as biphenol, etc.; reactive diluents, such as monoalkyl glycidyl ether, etc.; non-reactive diluents (plasticizers), such as dioctyl phthalate, dibutyl phthalate, benzyl alcohol, coal tar, etc.; silica, such as fused silica, crystalline silica, etc.; fillers, such as powders or conglobed beads of magnesium hydroxide, aluminum hydroxide, zinc molybdate, calcium carbonate, silicon carbonate, calcium silicate, potassium titanate, beryllia, zirconia, zircon, forsterite, steatite, spinel, mullite, titania, etc., and fibers, such as glass fiber, pulp fiber, synthetic fiber, ceramic fiber, etc.; reinforcing materials, such as glass cloth, aramid cloth, carbon fiber, etc.; pigments; silane coupling agents, such as γ-aminopropyltriethoxysilane, N-β-(aminoethyl)-γ-aminopropyltriethoxysilane, N-β-(aminoethyl)-N'-β-(aminoethyl)-γ-aminopropyltriethoxysilane, γ-anilinopropyltriethoxysilane, γ-glycidoxypropyltriethoxysilane, β-(3,4-epoxycyclohexyl)ethyltriethoxysilane, vinyltriethoxysilane, N-β-(N-vinylbenzylaminoethyl)-γ-aminopropyltriethoxysilane, γ-methacryloxypropyltrimethoxysilane, γ-chloropropyltrimethoxysilane, γ-mercaptopropyltrimethoxysilane, etc.; lubricants, such as candelilla wax, carnauba wax, Japan wax, Chinese wax, beeswax, lanolin, spermaceti wax, montan wax, petroleum wax, aliphatic wax, aliphatic ester, aliphatic ether, aromatic ester, aromatic ether, etc.; thickeners; thixotropic agents; antioxidants; light stabilizers; UV absorbers; antifoaming agents; rust preventives; and commonly used additives, such as colloidal silica, colloidal alumina, etc. In the present invention, an adhesive resin, such as xylene resin, petroleum resin, etc., may be used in combination.

The curable resin composition of the present invention may contain a silane coupling agent. Examples of the silane coupling agent may include γ-aminopropyltriethoxysilane, N-β-(aminoethyl)-γ-aminopropyltriethoxysilane, N-β-(aminoethyl)-N'-β-(aminoethyl)-γ-aminopropyltriethoxysilane, γ-anilinopropyltriethoxysilane, γ-glycidoxypropyltriethoxysilane, β-(3,4-epoxycyclohexyl)ethyltriethoxysilane, vinyltriethoxysilane, N-β-(N-vinylbenzylaminoethyl)-γ-aminopropyltriethoxysilane, γ-methacryloxypropyltrimethoxysilane, γ-chloropropyltrimethoxysilane, γ-mercaptopropyltrimethoxysilane, γ-glycidoxypropyltrimethoxysilane, etc.

Typically, the amount of the silane coupling agent is preferably, for example, from 0.001 to 15 mass%, more preferably from 0.01 to 10 mass%, in the solid content (all the components other than the solvent) of the curable resin composition.

The curable resin composition of the present invention may contain a filler. Examples of the filler may include: silica, such as fused silica, crystalline silica, etc.; inorganic fillers, such as powders or conglobed beads of magnesium hydroxide, aluminum hydroxide, zinc molybdate, calcium carbonate, silicon carbonate, calcium silicate, potassium titanate, beryllia, zirconia, zircon, forsterite, steatite, spinel, mullite, titania, etc., and fibers, such as glass fiber, pulp fiber, synthetic fiber, ceramic fiber, etc.; organic fillers, such as acrylic resin, silicone resin, polystyrene resin, polydivinyl benzene, etc.; rubber fillers, such as acrylonitrile-butadiene rubber (NBR), styrene-butadiene rubber (SBR), etc.; core-shell-type rubber fillers including, for example, a core constituted by butadiene rubber etc. and a shell constituted by acrylic resin, epoxy resin, etc.

Examples of commercially available fillers may include: Metablen (registered trademark) E series, Metablen (registered trademark) C series, and Metablen (registered trademark) W series from Mitsubishi Rayon Co., Ltd.; MX series, SX series, and SGP series from Soken Chemical & Engineering Co., Ltd.; Zefiac series from Aica Kogyo Co..Ltd.; ChromoSphere-T series from Thermo Fisher Scientific; Estapor (registered trademark) series from Merck Chimie; Fine Pearl (registered trademark) from Matsuura & Co., Ltd.; XER-91P and XER-81P from JSR Corporation; and TMS-2670 from Dow Chemical Company.

In cases where the curable resin composition of the present invention contains a filler, the content of the filler is preferably from 20 to 1000 parts by mass with respect to 100 parts by mass in total of the cyanate ester resin, the epoxy resin and the latent curing agent, and more preferably from 50 to 500 parts by mass from the viewpoint of workability when made into a one-pack composition.

Some features of the curable resin composition of the present invention include excellent storage stability, low initial viscosity, and low viscosity increase rate.

More specifically, it is preferable that the initial viscosity measured with an E-type viscometer (also called "E-type rotational viscometer") at 10 rpm at 25°C is preferably 70 Pa·s or less, and the viscosity increase rate is preferably 150% or less after being left to stand at 40°C for 72 hours. It is preferable that the curable resin composition of the present invention has a viscosity increase rate (viscosity rise rate) of 250% or less after being left to stand for 168 hours. It is particularly preferable that the initial viscosity measured with an E-type viscometer at 10 rpm at 25°C is 55 Pa·s or less.

The lower limit of the initial viscosity is preferably 5 Pa·s or greater from the viewpoint of ease of producing the curable resin composition. The lower limit of the viscosity increase rate (viscosity rise rate) is usually 100%.

It should be noted that "initial viscosity" preferably refers to the viscosity, measured with an E-type viscometer at

25°C, of a curable resin composition which has not been left to stand at 40°C for 0.5 hours or longer after production. The viscosity is measured after keeping the composition for 10 minutes at 25°C in a state of 10 rpm before measurement.

Components (excluding the fillers and the solvent) other than the cyanate ester resin, the epoxy resin and the latent curing agent in the curable resin composition of the present invention may be included in an amount that does not impair storage stability and heat resistance, but from the viewpoint of sufficiently securing the amount of components (A) to (C), the amount is preferably 10 mass% or less, more preferably 5 mass% or less, with respect to the solid content of the composition.

To cure the curable resin composition of the present invention, it is preferable to perform heating at, for example, from 80 to 200°C from the viewpoint of achieving the physical properties of the cured product.

The curable resin composition of the present invention is useful as a one-pack-type curable resin composition that can be cured by heating.

The resin composition of the present invention can be used for a wide range of applications, such as adhesives or coating materials for concrete, cement mortar, various metals, leather, glass, rubber, plastic, wood, cloth, paper, etc. Particularly, since the resin composition has excellent heat resistance, it can suitably be used for electronic applications and automotive applications, such as semiconductor sealing or electronic component adhesives.

## Examples

Next, the present invention will be described in further detail below according to Examples and Comparative Example. The invention, however, is not to be limited to the following Examples.

It should be noted that, "percent (%)" as described in the following Examples etc. is in terms of mass, unless specifically stated otherwise.

Production Example 1 (Synthesis of Modified Polyamine):
A flask was charged with 201 g (2.71 mol) of 1,2-diaminopropane and heated to 60°C. Then, 580 g (3.05 equivalents in terms of epoxy groups) of Adeka Resin EP-4100E (product from Adeka Corporation; bisphenol A-type epoxy resin; epoxy equivalent: 190) was added gradually such that the temperature within the system was kept from 100 to 110°C. After all the Adeka Resin EP-4100E was added, the temperature of the reaction system was raised to 140°C to cause reaction for 1.5 hours, to obtain a modified polyamine. Next, to 100 g of the obtained modified polyamine, 30 g of MP-800K (from Asahi Yukizai Corporation; phenol resin; softening point: 100°C) was added, and after unreacted material was removed by decompression deaeration for 1 hour under conditions of 180 to 190°C and 30 to 40 torr, the product was pulverized with a jet mill, to obtain a latent curing agent (EH-1).

Examples 1 to 3 and Comparative Examples 1 and 2:
Respective resin compositions were produced by using the latent curing agent, i.e., the component (C) obtained through the aforementioned Production Example, and commercially available products of components (A) and (B), and the following tests were conducted.

The compositional makeup and evaluation results are shown in Table 1 below. The numerical values of the compositional makeup shown in Table 1 indicate parts by mass.

### Initial Viscosity:

Using an E-type viscometer (TVE-33H from Toki Sangyo Co., Ltd.; cone plate radius: 7.7 mm (3°)), viscosity was measured at 10 rpm at 25°C.

### Viscosity Increase Rate:

An accelerated test was conducted by leaving each curable resin composition to stand in a 40°C thermostatic chamber for 72 hours and 168 hours, and the initial viscosity and the respective viscosities under the aforementioned conditions were measured, to find the viscosity increase rate from the initial viscosity.

$$(\text{Viscosity after acceleration/initial viscosity}) \times 100\ [\%]$$

### Glass Transition Point (Tg):

Each curable resin composition was cured by heating at 125°C for 1 hour, to produce a 10-mm cylindrical test piece having a diameter of 4 mm. A mean linear expansion curve was created using a TMA device in accordance with JIS K

7197. The glass transition point (Tg) was determined from the inflection point on the curve. Samples whose glass transition point (Tg) was equal to or above 120°C were rated as "A", whereas samples with a Tg below 120°C were rated as "B".

[Table 1]

| | Formulation | Example 1 | Example 2 | Example 3 | Comparative Example 1 | Comparative Example 2 |
|---|---|---|---|---|---|---|
| Compositional makeup (parts by mass) | EP-4300E | 3.4 | 4.0 | 3.5 | 3.4 | 5.1 |
| | EP-4088S | 3.4 | 3.7 | 2.8 | 3.4 | 5.1 |
| | EP-3950S | | | | 3.5 | |
| | EP-3900S | 3.5 | 2.5 | 4.5 | | |
| | LECy | 10.2 | 10.2 | 9.6 | 10.2 | 10.2 |
| | EH-1 | 6.6 | 6.6 | 6.6 | 6.6 | 6.6 |
| | Powder filler | 70.0 | 70.0 | 70.0 | 70.0 | 70.0 |
| | KBM-403 | 1.2 | 1.2 | 1.2 | 1.2 | 1.2 |
| | **Total** | 98.2 | 98.2 | 98.2 | 98.2 | 98.2 |
| Evaluation results | Initial viscosity (Pa·S) | 32 | 37 | 41 | 33 | 27 |
| | Viscosity increase rate: 40°C, 72 h | 123% | 116% | 125% | 159% | 114% |
| | Viscosity increase rate: 40°C, 168 h | 190% | 178% | 195% | Cured | |
| | Tg (°C) | A | A | A | A | B |

(Note: The curable resin composition of Comparative Example 1 cured after being left to stand at 40°C for 168 hours, and could not be measured for viscosity increase rate. As for Comparative Example 2, the viscosity increase rate after 168 hours was not measured.)
EP-4300E: Bisphenol A-type epoxy resin (from Adeka Corporation)
EP-4088S: Dicyclopentadiene-type epoxy resin (from Adeka Corporation)
EP-3900S: 4-Amino-3-methylphenol-type epoxy resin (from Adeka Corporation)
EP-3950S: Aminophenol-type epoxy resin from Adeka Corporation
LECy: Bisphenol-type cyanate ester resin from Lonza K.K.
Powder filler: Silica powder; average particle size: 13.7 μm
KBM-403: Shin-Etsu Silicone; silane coupling agent

As shown by the aforementioned Examples, the curable resin compositions containing specific epoxy resins of the present invention have excellent storage stability, and the cured products have sufficient heat resistance.

In contrast, the curable resin compositions not containing specific epoxy resins of the present invention exhibited an increase in viscosity and had poor storage stability, or the cured product had no heat resistance.

Industrial Applicability

The curable resin composition of the present invention particularly has excellent storage stability and its cured product has excellent heat resistance, and can suitably be used, for example, as adhesives for electronic components.

## Claims

**1.** A curable resin composition comprising:

(A) a cyanate ester resin;

(B) an epoxy resin essentially including a 4-amino-3-methylphenol-type epoxy resin and an aliphatic epoxy resin; and

(C) a latent curing agent;

wherein the amount of the 4-amino-3-methylphenol-type epoxy resin within the total amount of the epoxy resins is from 20 to 100 mass%, and the amount of the aliphatic epoxy resin within the total amount of the epoxy resins is from 1 to 70 mass%.

**2.** The curable resin composition according to claim 1, wherein the cyanate ester resin, which is component (A), is at least one selected from the group consisting of a compound represented by formula (1) below, a compound represented by formula (2) below, and a polymer of the compound represented by formula (1) and/or the compound represented by formula (2):

$$NC\text{-}O\text{-}A^1\text{-}Y^1\text{-}A^2\text{-}O\text{-}CN \quad (1)$$

(in the formula, $Y^1$ represents a divalent hydrocarbon group which is not substituted or is substituted by a fluorine atom or a cyanato group, or represents -O-, -S-, or a single bond; and

$A^1$ and $A^2$ each independently represent a phenylene group which is not substituted or is substituted by 1 to 4 alkyl groups);

[Chem. 1]

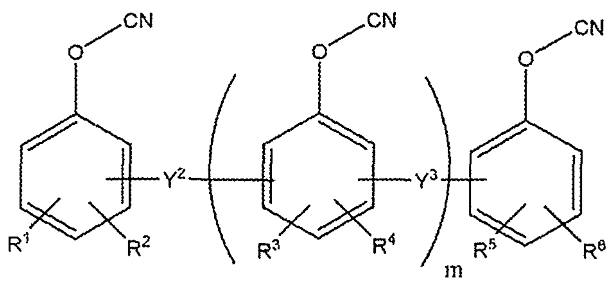

(2)

(in the formula, m represents an integer of 1 or greater;

$Y^2$ and $Y^3$ each independently represent -S-, or a divalent hydrocarbon group which is not substituted or is substituted by a fluorine atom or a cyanato group; and

$R^1$, $R^2$, $R^3$, $R^4$, $R^5$, and $R^6$ each independently represent a hydrogen atom or an alkyl group having 1 to 4 carbon atoms).

**3.** The curable resin composition according to claim 2, wherein $Y^1$ in the formula (1) and $Y^2$ and $Y^3$ in the formula (2) each independently represent at least one selected from formulas (Y-1) to (Y-9) below:

[Chem. 2]

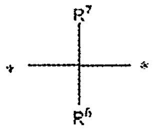

(Y-1)

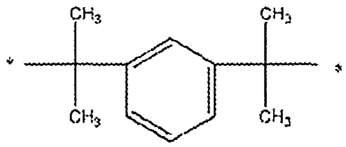

(Y-2)

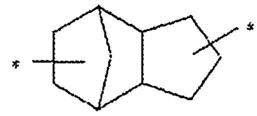

(Y-3)

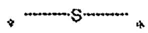

(Y-4)

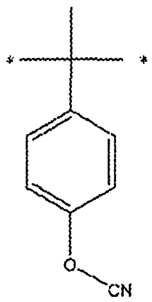

(Y-5)

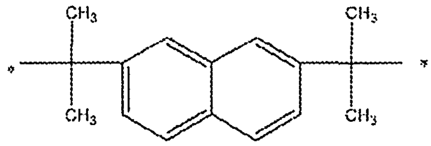

(Y-6)

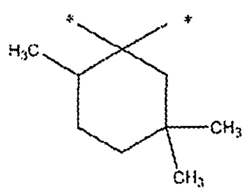

(Y-7)

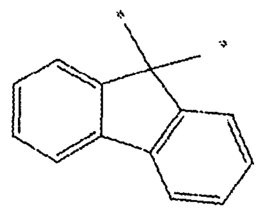

(Y-8)

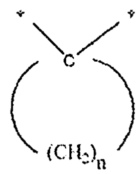

(Y-9)

(in the formulas, n represents an integer from 4 to 12; $R^7$ and $R^8$ each independently represent a hydrogen atom or a methyl group which is not substituted or is substituted by a fluorine atom; and * represents a bonding site).

**4.** The curable resin composition according to any one of claims 1 to 3, wherein the latent curing agent, which is component (C), is an active-hydrogen-containing amine-based latent curing agent.

**5.** The curable resin composition according to claim 4, wherein the active-hydrogen-containing amine-based latent curing agent is at least one selected from (C-1) to (C-4) below:

(C-1): a modified amine obtained by reacting an epoxy compound and an amine compound having one or more active hydrogens;
(C-2): a modified amine obtained by reacting an isocyanate compound and an amine compound having one or more active hydrogens;
(C-3): a modified amine obtained by reacting an epoxy compound, an isocyanate compound, and an amine compound having one or more active hydrogens; and
(C-4): a latent curing agent containing a phenol resin in addition to at least one of modified amine selected from (C-1), (C-2), or (C-3).

**6.** The curable resin composition according to any one of claims 1 to 5, wherein a content of the 4-amino-3-methylphenol-type epoxy resin is from 1 to 200 parts by mass with respect to 100 parts by mass of the cyanate ester resin, which is component (A).

**7.** The curable resin composition according to any one of claims 1 to 6, wherein, when a viscosity is measured using an E-type rotational viscometer at 10 rpm at 25°C, an initial viscosity is 70 Pa·s or less, and a viscosity increase rate after being left to stand at 40°C for 72 hours is 150% or less.

**8.** A cured product obtained by curing the curable resin composition according to any one of claims 1 to 7.

**9.** An adhesive comprising the curable resin composition according to any one of claims 1 to 7.

## Patentansprüche

**1.** Härtbare Harzzusammensetzung, umfassend:

(A) ein Cyanatesterharz;
(B) ein Epoxidharz, das im Wesentlichen ein Epoxidharz vom 4-Amino-3-methylphenol-Typ und ein aliphatisches Epoxidharz umfasst; und
(C) ein latentes Härtungsmittel;

wobei die Menge des Epoxidharzes vom 4-Amino-3-methylphenol-Typ innerhalb der Gesamtmenge der Epoxidharze 20 bis 100 Masse-% beträgt und die Menge des aliphatischen Epoxidharzes innerhalb der Gesamtmenge der Epoxidharze 1 bis 70 Masse-% beträgt.

**2.** Härtbare Harzzusammensetzung gemäß Anspruch 1, wobei das Cyanatesterharz, das die Komponente (A) ist, mindestens eines ausgewählt aus der Gruppe ist, die aus einer Verbindung dargestellt durch die nachstehende Formel (1), einer Verbindung dargestellt durch die nachstehende Formel (2) und einem Polymer der Verbindung dargestellt durch die Formel (1) und/oder der Verbindung dargestellt durch die Formel (2) besteht:

$$NC\text{-}O\text{-}A^1\text{-}Y^1\text{-}A^2\text{-}O\text{-}CN \qquad (1)$$

(in der Formel steht $Y^1$ für eine divalente Kohlenwasserstoffgruppe, die nicht substituiert oder durch ein Fluoratom oder eine Cyanatogruppe substituiert ist, oder für -O-, -S- oder eine Einfachbindung; und

$A^1$ und $A^2$ jeweils unabhängig voneinander eine Phenylengruppe darstellen, die nicht substituiert oder durch 1 bis 4 Alkylgruppen substituiert ist);

[Chem. 1]

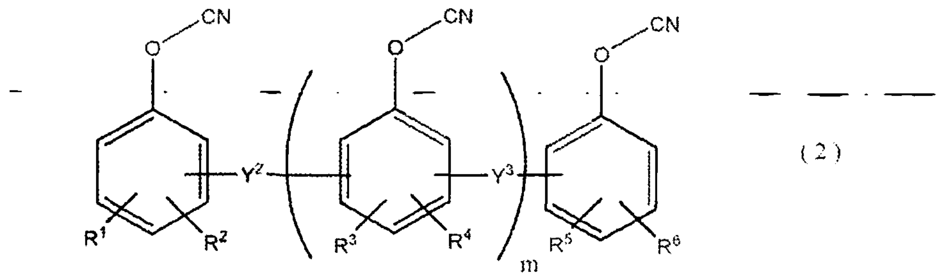

(2)

(in der Formel steht m für eine ganze Zahl von 1 oder größer;
stellen $Y^2$ und $Y^3$ jeweils unabhängig voneinander -S- oder eine divalente Kohlenwasserstoffgruppe, die nicht substituiert oder durch ein Fluoratom oder eine Cyanatogruppe substituiert ist, dar; und
stellen $R^1$, $R^2$, $R^3$, $R^4$, $R^5$ und $R^6$ jeweils unabhängig voneinander ein Wasserstoffatom oder eine Alkylgruppe mit 1 bis 4 Kohlenstoffatomen dar).

**3.** Härtbare Harzzusammensetzung gemäß Anspruch 2, wobei $Y^1$ in der Formel (1) und $Y^2$ und $Y^3$ in der Formel (2) jeweils unabhängig voneinander mindestens eine der folgenden Formeln (Y-1) bis (Y-9) darstellen:

[Chem. 2]

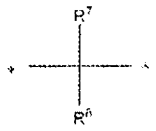
(Y-1)

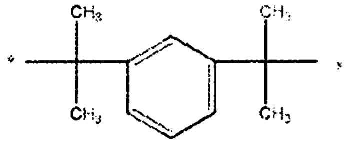
(Y-2)

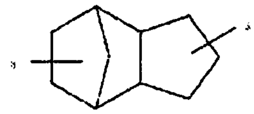
(Y-3)

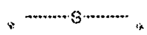
(Y-4)

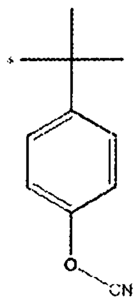
(Y-5)

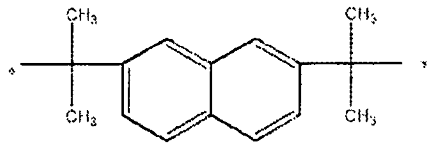
(Y-6)

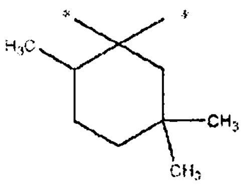
(Y-7)

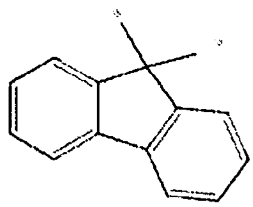
(Y-8)

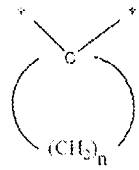
(Y-9)

(in den Formeln steht n für eine ganze Zahl von 4 bis 12; stehen $R^7$ und $R^8$ jeweils unabhängig voneinander für ein Wasserstoffatom oder eine Methylgruppe, die nicht substituiert oder durch ein Fluoratom substituiert ist; und steht * für eine Bindungsstelle).

4. Härtbare Harzzusammensetzung gemäß einem der Ansprüche 1 bis 3, wobei das latente Härtungsmittel, das die Komponente (C) ist, ein aktiven Wasserstoff enthaltendes Amin-basiertes latentes Härtungsmittel ist.

5. Härtbare Harzzusammensetzung gemäß Anspruch 4, wobei das aktiven Wasserstoff enthaltende Amin-basierte latente Härtungsmittel mindestens eines aus den folgenden (C-1) bis (C-4) ist:

(C-1): modifiziertes Amin, das durch Umsetzung einer Epoxidverbindung und einer Aminverbindung mit einem oder mehreren aktiven Wasserstoffatomen erhalten wird;
(C-2): modifiziertes Amin, das durch Umsetzung einer Isocyanatverbindung und einer Aminverbindung mit einem oder mehreren aktiven Wasserstoffatomen erhalten wird;
(C-3): modifiziertes Amin, das durch Umsetzung einer Epoxidverbindung, einer Isocyanatverbindung und einer Aminverbindung mit einem oder mehreren aktiven Wasserstoffatomen erhalten wird; und
(C-4): latentes Härtungsmittel, das zusätzlich zu mindestens einem modifizierten Amin, ausgewählt aus (C-1), (C-2) oder (C-3), ein Phenolharz enthält.

6. Härtbare Harzzusammensetzung gemäß einem der Ansprüche 1 bis 5, wobei der Gehalt an 4-Amino-3-methylphenol-Epoxidharz 1 bis 200 Masseteile, bezogen auf 100 Masseteile des Cyanatesterharzes, das die Komponente (A) ist, beträgt.

7. Härtbare Harzzusammensetzung nach einem der Ansprüche 1 bis 6, wobei bei Messung der Viskosität mit einem Rotationsviskosimeter vom Typ E bei 10 U/min und 25 °C die Anfangsviskosität 70 Pa·s oder weniger beträgt und die

Rate der Viskositätszunahme nach 72-stündigem Stehenlassen bei 40 °C 150 % oder weniger beträgt.

**8.** Gehärtetes Produkt, das durch Aushärten der härtbaren Harzzusammensetzung gemäß einem der Ansprüche 1 bis 7 erhalten wird.

**9.** Klebstoff, der die härtbare Harzzusammensetzung gemäß einem der Ansprüche 1 bis 7 umfasst.

**Revendications**

**1.** Composition de résine durcissable comprenant:

(A) une résine d'ester cyanate;
(B) une résine époxy comprenant essentiellement une résine époxy de type 4-amino-3-méthylphénol et une résine époxy aliphatique; et
(C) un agent de durcissement latent;

dans laquelle la quantité de résine époxy de type 4-amino-3-méthylphénol dans la quantité totale des résines époxy est de 20 à 100 % en masse, et la quantité de résine époxy aliphatique dans la quantité totale des résines époxy est de 1 à 70 % en masse.

**2.** Composition de résine durcissable selon la revendication 1, dans laquelle la résine d'ester cyanate, qui est le composant (A), est au moins une choisie dans le groupe constitué par un composé représenté par la formule (1) ci-dessous, un composé représenté par la formule (2) ci-dessous et un polymère du composé représenté par la formule (1) et/ou du composé représenté par la formule (2):

$$NC\text{-}O\text{-}A^1\text{-}Y^1\text{-}A^2\text{-}O\text{-}CN \qquad (1)$$

(dans la formule, $Y^1$ représente un groupe hydrocarboné divalent qui n'est pas substitué ou qui est substitué par un atome de fluor ou un groupe cyanato, ou représente - O-, -S- ou une liaison simple; et

$A^1$ et $A^2$ représentent chacun indépendamment un groupe phénylène qui n'est pas substitué ou qui est substitué par 1 à 4 groupes alkyle);

[Chem. 1]

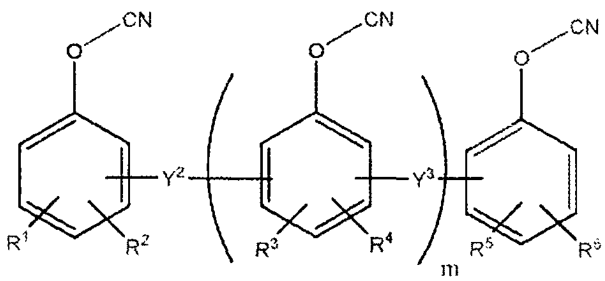

(2)

(dans la formule, m représente un nombre entier supérieur ou égal à 1;
$Y^2$ et $Y^3$ représentent chacun indépendamment -S-, ou un groupe hydrocarboné divalent qui n'est pas substitué ou qui est substitué par un atome de fluor ou un groupe cyanato; et
$R^1$, $R^2$, $R^3$, $R^4$, $R^5$ et $R^6$ représentent chacun indépendamment un atome d'hydrogène ou un groupe alkyle ayant 1 à 4 atomes de carbone).

**3.** Composition de résine durcissable selon la revendication 2, dans laquelle $Y^1$ dans la formule (1) et $Y^2$ et $Y^3$ dans la formule (2) représentent chacun indépendamment au moins un élément choisi parmi les formules (Y-1) à (Y-9) ci-dessous:

[Chem. 2]

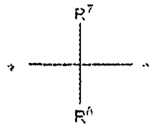

(Y-1)

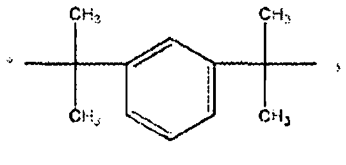

(Y-2)

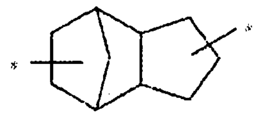

(Y-3)

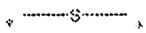

(Y-4)

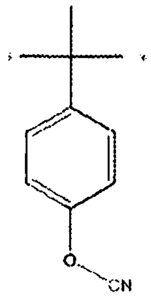

(Y-5)

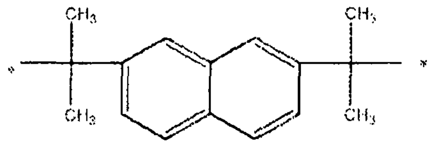

(Y-6)

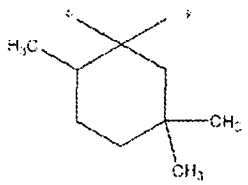

(Y-7)

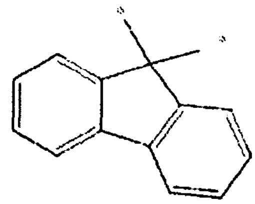

(Y-8)

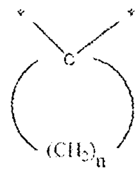

(Y-9)

(dans les formules, n représente un nombre entier de 4 à 12; $R^7$ et $R^8$ représentent chacun indépendamment un atome d'hydrogène ou un groupe méthyle qui n'est pas substitué ou qui est substitué par un atome de fluor ; et * représente un site de liaison).

**4.** Composition de résine durcissable selon l'une quelconque des revendications 1 à 3, dans laquelle l'agent de durcissement latent, qui est le composant (C), est un agent de durcissement latent à base d'amine contenant de l'hydrogène actif.

**5.** Composition de résine durcissable selon la revendication 4, dans laquelle l'agent de durcissement latent à base d'amine contenant de l'hydrogène actif est au moins un agent choisi parmi (C-1) à (C-4) ci-dessous:

(C-1): une amine modifiée obtenue par réaction d'un composé époxy et d'un composé aminé comportant un ou plusieurs atomes d'hydrogène actifs;
(C-2): une amine modifiée obtenue par réaction d'un composé isocyanate et d'un composé aminé comportant un ou plusieurs atomes d'hydrogène actifs;
(C-3): une amine modifiée obtenue par réaction d'un composé époxy, d'un composé isocyanate et d'un composé aminé comportant un ou plusieurs atomes d'hydrogène actifs; et
(C-4): un agent de durcissement latent contenant une résine phénolique en plus d'au moins une amine modifiée choisie parmi (C-1), (C-2) ou (C-3).

**6.** Composition de résine durcissable selon l'une quelconque des revendications 1 à 5, dans laquelle la teneur en résine époxy de type 4-amino-3-méthylphénol est de 1 à 200 parties en masse pour 100 parties en masse de la résine d'ester cyanate, qui est le composant (A).

**7.** Composition de résine durcissable selon l'une quelconque des revendications 1 à 6, dans laquelle, lorsque la

viscosité est mesurée à l'aide d'un viscosimètre rotatif de type E à 10 tr/min à 25 °C, la viscosité initiale est de 70 Pa·s ou moins, et le taux d'augmentation de la viscosité après avoir été laissée au repos à 40 °C pendant 72 heures est de 150 % ou moins.

**8.** Produit durci obtenu en durcissant la composition de résine durcissable selon l'une quelconque des revendications 1 à 7.

**9.** Adhésif comprenant la composition de résine durcissable selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6469074 B
- JP S60250026 A
- US 2002058778 A1
- US 2012178853 A1
- US 2012309923 A1
- WO 2011099292 A1
- US 2009311827 A1
- JP 2009158712 A
- JP 2009155450 A
- JP 5508342 B
- JP 2019077804 A
- WO 2013183303 A1
- JP 2013216865 A